# EUROPEAN PATENT SPECIFICATION

(11) **EP 2 472 705 B1**
(45) Date of publication and mention of the grant of the patent: **07.05.2014**
(21) Application number: 11150030.2
(22) Date of filing: 03.01.2011
(51) Int. Cl.: H02K 3/12

(54) **Stator element for an electrical machine**
Statorelement für eine elektrische Maschine
Élément de stator pour une machine électrique

(43) Date of publication of application: 04.07.2012
(73) Proprietor: Siemens Aktiengesellschaft, 80333 München (DE)
(72) Inventor: Semmer, Silvio, 7330 Brande (DK); Stiesdal, Henrik, 5000 Odense C (DK)

(56) References cited:
- EP-A1- 2 166 644
- DE-A1-102009 032 883
- JP-A- 2009 189 078
- JP-A- 2010 246 342

## Description

The invention relates to a stator element for an electrical machine, particularly a generator, comprising a yoke having at least two adjacently disposed axially extending slots for accommodating at least one stator winding being built of a number of strands stacked on top of each other in radial direction, with each stator winding comprising end windings axially extending off the yoke.

It is common to use so called double-layer winding setups in large electrical machines or generators as being used for large-scaled wind turbines for instance, since all stator windings are identical and hence, easy to manufacture.

However, in electrical machines with a high number of poles and small pole pitch the double layer windings can be difficult to mount because an insertion of a last stator winding within dedicated slots requires to lift an already installed first stator winding out of the slot in order to complete winding. That is, in order to insert the last stator winding the first stator winding has to be temporarily removed. Furthermore, in the case of segmented electrical machines double layer windings require stator windings that connect across the segment joint.

Single layer winding designs overcome these drawbacks since they do not require the removal of the first inserted stator winding when inserting the last stator winding in the respective slots of the yoke. Additionally, single-layer windings that do not need to cross segment joints are available. Single layer windings normally require both in-plane and out-of-plane end windings (cf. winding overhangs or winding heads). Consequently, single-layer windings have certain advantages, particularly regarding large-scaled electrical machines such as generators for wind turbines for instance.

Yet, known single-layer technologies lead to large end windings taking up much space at the axial endings of the stator element. Consequently, huge amounts of copper or the like are necessary for the respective stator windings as well.

JP 2010-246342 A discloses a stator in an electric machine. The stator comprises a stator core having axial slots built in between respective radial stator tooth, whereby respective stator windings are disposed within the slots. Thereby, the end windings of first stator windings axially extend off the stator core, whereas the end windings of second stator windings are bent in radially outward direction.

EP 2 166 644 A1 relates to a specific design of end windings for a stator element, comprising three groups of stator windings essentially having the same length, whereby at least two end windings are radially tilted with different tilting angles. Yet, the design still requires a huge amount of space since the end windings need to have a certain length in order to pass each other. Particularly in the case of aluminium stator windings, originally having a comparatively low electrical connectivity this inevitably leads to a different constructive design of the yoke in order to obtain a desired electrical output of the electrical machine.

Hence, it is the object of the invention to provide an improved stator element, particularly concerning reduced dimensions and efficient material use.

This is achieved by a stator element according to present claim 1.

The present invention proposes a novel design for stator windings, that is particularly for the end windings of respective stator windings, which design is essentially based on strands differing in their axial length thereby providing at least one, preferably both end windings with a bevelled or curved shape. The bevelled or curved shape of the end windings gives rise to a reduction of the axial dimensions of the end windings and thus, the stator element as a whole. The reduction of the axial dimensions or length of the end windings further contributes to a decrease of material use allowing a more light weight and cost-effective construction of the stator element. Likewise, it is possible to increase the power output or output torque of the respective stator element in the case of keeping the axial dimensions of the stator element constant, that is the stator element has the same overall axial length, since the respective stator element has an elongated yoke.

The bevelled or curved shape of the end windings refers to all kinds of inclined, convex or concave curved shapes. The inclinations or curvatures may be constant, that is uniform or non-constant, that is non-uniform. For a given stator element having two end windings axially extending off the yoke, the respective end windings may have the same or different shapes. In a basic embodiment of the invention both end windings of a stator winding are bevelled, giving the stator winding a trapezoid shape in a longitudinal cut view.

The present stator element may comprise an entire, particularly ring-shaped stator. Aside, the present stator element may be built as a particularly ring-shaped stator segment, whereby a number of respective stator elements may be connected to build an entire stator.

The present stator element is applicable both for the use in electrical machines having an outer stator - inner rotor as well as an outer rotor - inner stator configuration.

If the stator element comprises more than one stator winding, that is in the exemplary case of a three phase electrical machine having three separate stator windings the end windings of the respective stator windings are preferably differently shaped. The shapes of the respective end windings correspond in such a manner, that the axial dimensions of the stator element are reduced. Thereby, it is preferred that in cases of the stator comprising more than one stator winding the end winding of a first stator winding is shaped to at least partially encase the end winding of a further stator winding which will be described later in more detail.

Regarding the respective stator winding or stator windings, the axial length of the strands of a respective stator winding decreases in radially outward or inward direction. The axial length of the respective strands in combination with their arrangement mainly defines the shape: of the respective stator winding or the respective end windings, respectively. Thereby, it is provided that in case of more than one stator winding the strands of a first stator winding increase in axial length in radially outward direction, whereas the strands of another stator winding decrease in axial length in radially outward direction.

It is possible, that the end windings of a stator winding are tilted in radially outward or inward direction. Tilting of the end windings also has an effect on the axial dimensions of the end windings and further, the stator element as a whole. Tilting may be accompanied with deeper slots of the yoke thereby, assuring that the end windings do not exceed the height of the yoke, that is the end windings do not exceed the radial dimensions of the yoke, so that there is sufficient space for an air gap between the stator element and a rotor. Since tilting is possible both in radially outward and inward direction the inventive stator element is adapted to be used in electrical machines having an outer rotor - in-ner stator configuration as well as electrical machines having an outer stator - inner rotor configuration. Exemplary embodiments will be described in the following

If the stator element comprises three stator windings for instance, it is possible that the end windings of a first stator winding are not tilted or tilted in radially outward direction and the end windings of the second and third stator winding are tilted in radial inward direction. This embodiment is applicable for a three phase electrical machine having an outer stator - inner rotor configuration for instance.

Accordingly, it is possible that the stator element comprises three stator windings, whereby the end windings of a first stator winding are not tilted or tilted in radially inward direction and the end windings of the second and third stator winding are tilted in radial outward direction. This embodiment is applicable for a three phase electrical machine having an outer rotor - inner stator configuration for instance.

In a further embodiment of the invention a stator element comprises more than one stator winding, whereby the end windings of the respective stator windings are tilted in different angles with respect to the centre axis of the stator element. Tilting of the end windings also contributes to the reduction of the axial dimensions, since it is possible to arrange the end windings relative to each other more closely, that is the provision of the end windings in a more dense packing leading to a more efficient use of space.

Applied to a stator element comprising three stator windings it is possible that the end windings of a first stator winding are tilted ca. 0 - 15° in anti-clockwise direction and the end windings of a second stator winding are tilted ca. 45° in clockwise direction and the end windings of a third stator winding are tilted ca. 90° in clockwise direction with respect to the centre or longitudinal axis of the stator element. Of course, other angles are thinkable in exceptional cases under the premise of reducing the overall axial length of the stator element, that is at least the respective end windings.

Accordingly, it is possible that the stator element comprises three stator windings, whereby the end windings of a first stator winding are tilted ca. 0 - 15° in clockwise direction and the end windings of a second stator winding are tilted ca. 45° in anti-clockwise direction and the end windings of a third stator winding are tilted ca. 90° in anti-clockwise direction with respect to the centre or longitudinal axis of the stator element. Likewise, other angles are thinkable in exceptional cases under the premise of reducing the overall axial length of the stator element, that is at least the end windings.

In favour, the strands are made of metal, particularly copper or aluminium. Thereby, copper shows better electrical conductivity while the price is comparatively high. Aluminium represents a more cost-effective material yet, the electrical conductivity is comparatively low. In the case of the strand being made of aluminium, it maybe necessary to adapt the depths of the slots in order to obtain a respective power output comparable to the use of copper strands. Other electrically conductive metals or materials in general are applicable in exceptional cases.

In addition, the invention relates to an electrical machine, particularly a generator for a wind turbine having a rotor rotatable relative to a stator with the stator comprising at least one stator element as described above. Hence, the axial dimensions of the electrical machines may be reduced contributing to a more light weight and cost-effective design. Accordingly, when keeping the axial dimensions of the electrical machine constant, power output or output torque of the respective electrical machine may be increased. The electrical machine is preferably used as a generator for a wind turbine, particularly a large-scaled directly driven wind turbine.

Aside, the invention relates to a wind turbine, particularly a direct drive wind turbine, comprising an electrical machine, particularly in the shape of a generator, as described before.

Further advantages and details of the present invention can be taken from the following detailed description of preferred embodiments of the invention as well as the principle drawings, whereby:
- FIG 1: shows a stator element according to a first embodiment of the invention;
- FIG 2: shows a partially cut perspective view of fig. 1;
- FIG 3: shows a stator element according to a second embodiment of the invention;
- FIG 4: shows a perspective view of the embodiment according to fig. 2; and
- FIG 5 - FIG 6: show the inventive stator element according to the embodiment of fig. 2 in a comparison with a stator element known from prior art.

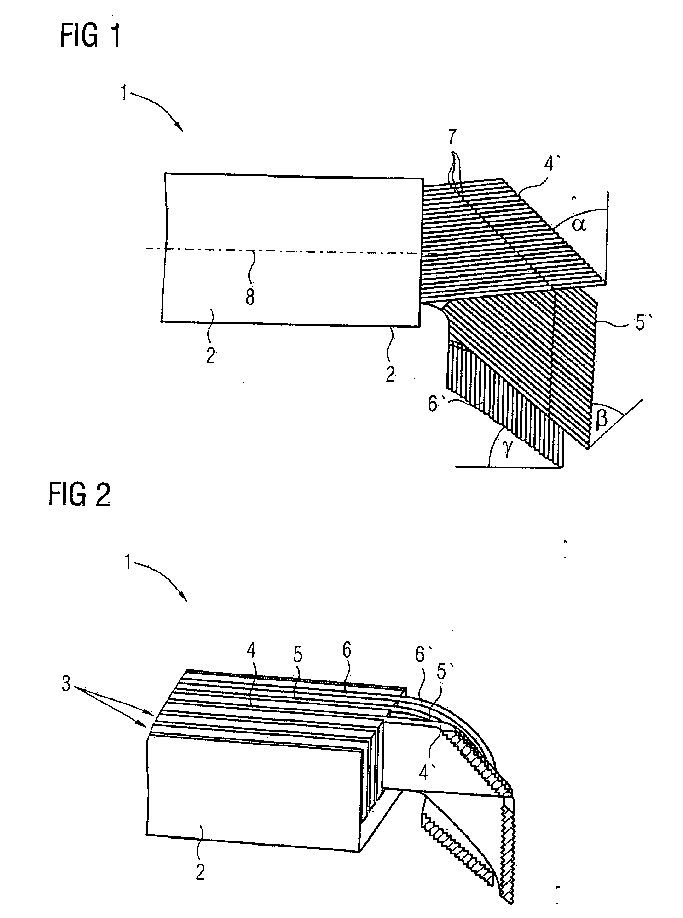

Fig. 1 shows a stator element 1 according to a first embodiment of the invention. The stator element 1 is preferably used in an electrical machine such as a generator for a wind turbine (not shown).

The stator element 1 comprises a yoke 2 having a number of adjacently disposed slots 3 (cf. fig. 2), which slots 3 are uniformly distributed around the circumference of the radially inner or outer surface of the yoke 2 depending on whether the stator element 1 is used in an inner stator-outer rotor or an outer stator - inner rotor configuration of the respective electrical machine. The slots 3 accommodate three stator windings 4, 5, 6 in known manner, whereby the stator windings 4, 5, 6 comprise end windings 4', 5', 6'axially extending off the yoke 2. The stator windings 4, 5, 6 are built of a number of copper strands 7 stacked on top of each other in radial direction.

According to the invention, the strands 7 of the respective stator windings 4, 5, 6 differ in their axial lengths, which leads to a bevelled shape of the respective end windings 4', 5', 6'. The bevelled shape of the end windings 4', 5', 6' is based on the fact, that the axial lengths of the strands 7 of the respective stator windings 4, 5 decrease in radially outward direction, whereas the lengths of the strands 7 of the stator winding 6 decreases in radially inward direction.

The invention provides a more compact and densely packed design of the end windings 4', 5', 6', that is the overall axial length of the stator element 1 may be reduced. Consequently, material usage is diminished leading to a light weight and cost-effective construction of the stator element 1.

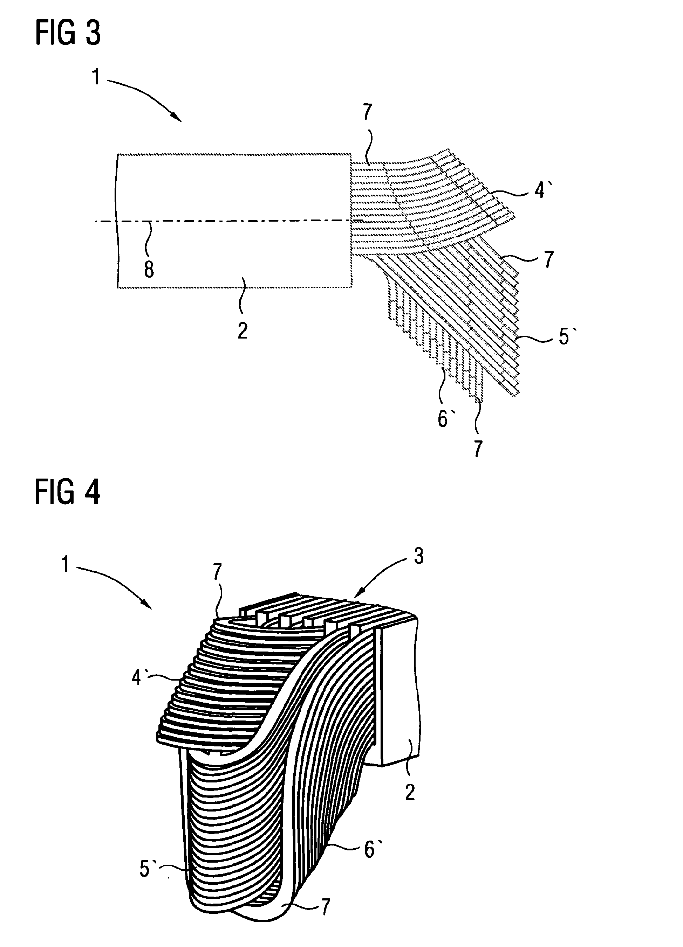

As is further discernible, the end windings 4', 5', 6' are tilted, that is the end winding 4' of stator winding 4 is only slightly tilted in radially outward direction, whereas the end windings 5', 6' of the stator windings 5, 6 are tilted in radial inward direction. This gives rise to a very close and dense arrangement of the respective end windings 4', 5', 6', whereby adjacently disposed end windings 4', 5', 6' or portions of end windings 4', 5', 6' may at least partially encase each other (cf. fig. 4).

As is discernible from fig. 1 for instance, the end windings 4', 5', 6' of the respective stator windings 4, 5, 6 are tilted in different angles with respect to the centre axis 8 of the stator element 1. According to the embodiment in fig. 1, the end windings 4' of stator winding 4 are tilted ca. 10° in anti-clockwise direction, the end windings 5' of stator winding 5 are tilted ca. 45° in clockwise direction and the end windings 6' of stator winding 6 are tilted ca. 90° in clockwise direction with respect to the centre or longitudinal axis 8 of the stator element 1.

Thereby, the strands 7 of stator winding 4 are arranged in such a manner, that the respective bevelled shape of the end winding 4' shows an angle α which is essentially the same than the tilting angle of end winding 5'. Accordingly, the bevelled shape of end winding 5' shows an angle β which corresponds to the tilting angle of end winding 6'. The bevelled shape of end winding 6' shows an angle γ which corresponds to the tilting angle of end winding 5' as well.

Hence, as is also depicted in fig. 3, 4 the shapes of the respective end windings 4', 5', 6' correspond to each other giving rise to the mentioned close package of the end windings 4', 5', 6'. Thereby, essentially the end windings 4' encase the upper part of the end windings 5', whereas the end windings 6' encase the lower part of the end winding 5', so that end winding 5' is "nestled" between the end windings 4', 6' (cf. fig. 4).

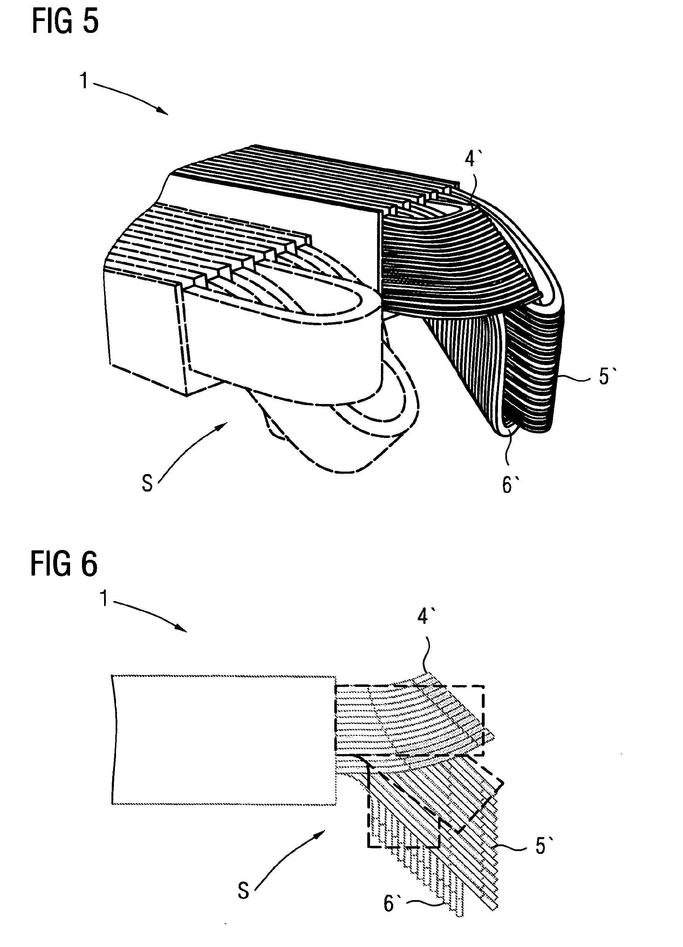

Fig. 5, 6 show the inventive stator element 1 in a comparison with a stator element S (dotted) known from prior art. It is discernible, that the inventive stator element 1 comprises a more dense and close package of the end windings 4', 5', 6'. This also leads to a diminished material use giving rise to a light weight and cost-effective construction. In the case of keeping the axial dimensions of the stator element 1 constant, the yoke 2 may be elongated, thereby increasing the power output or torque of the stator element 1 and further, the power output of the electrical machine, respectively.

## Claims

1. Stator element (1) for an electrical machine, particularly a generator, comprising a yoke (2) having at least two adjacently disposed axially extending slots (3) for accommodating one stator winding (4, 5, 6), the stator winding (4, 5, 6) being built of a number of strands (7) stacked on top of each other in radial direction, with each stator winding (4, 5, 6) comprising end windings (4', 5', 6') axially extending off the yoke (2), whereby the strands (7) of the respective stator winding (4, 5, 6) differ in their axial lengths with at least one end winding (4', 5', 6') of a respective stator winding (4, 5, 6) having a bevelled or curved shape, whereby the axial lengths of the strands (7) of a respective stator winding (4, 5, 6) decrease in radially outward or inward direction, wherein the strands of a first stator winding increase in axial length in radially outward direction, whereas the strands of another stator winding decrease in axial length in radially outward direction.

2. Stator element according to claim 1, wherein the stator element (1) comprises more than one stator winding (4, 5, 6), whereby the end windings (4', 5', 6') of the respective stator windings (4, 5, 6) are differently shaped.

3. Stator element according to one of the preceding claims, wherein the end windings (4', 5', 6') of a stator winding (4, 5, 6) are tilted in radially outward or inward direction.

4. Stator element according to claim 3, wherein the stator element (1) comprises three stator windings (4, 5, 6), whereby the end windings (4') of a first stator winding (4) are not tilted or tilted in radially outward direction and the end windings (5', 6') of the second and third stator winding (5, 6) are tilted in radial inward direction.

5. Stator element according to claim 3, wherein the stator element (1) comprises three stator windings (4, 5, 6), whereby the end windings of a first stator winding are not tilted or tilted in radially inward direction and the end windings of the second and third stator winding are tilted in radial outward direction.

6. Stator element according to one of the preceding claims, wherein the stator element (1) comprises more than one stator winding (4, 5, 6), whereby the end windings (4', 5', 6') of the respective stator windings (4, 5, 6) are tilted in different angles with respect to the centre axis (8) of the stator element (1).

7. Stator element according to claim 6, wherein the stator element (1) comprises three stator windings (4, 5, 6), whereby the end windings (4') of a first stator winding (4) are tilted 0 - 15° in anti-clockwise direction and the end windings (5') of a second stator winding (5) are tilted 45° in clockwise direction and the end windings (6') of a third stator winding (6) are tilted 90° in clockwise direction with respect to the centre axis (8) of the stator element (1).

8. Stator element according to claim 6, wherein the stator element (1) comprises three stator windings (4, 5, 6), whereby the end windings of a first stator winding are tilted 0 - 15° in clockwise direction and the end windings of a second stator winding are tilted 45° in anti-clockwise direction and the end windings of a third stator winding are tilted 90° in anti-clockwise direction with respect to the centre axis (8) of the stator element (1).

9. Stator element according to one of the preceding claims, wherein the end windings (4', 6') of a first stator winding (4, 6) are shaped to at least partially encase the end windings (5') of a further stator winding (5).

10. Stator element according to one of the preceding claims, wherein the strands (7) are made of metal, particularly copper or aluminium.

11. Electrical machine, particularly generator for a wind turbine, having a rotor rotatable relative to a stator with the stator comprising at least one stator element (1) according to one of the preceding claims.

12. Wind turbine, particularly direct drive wind turbine, comprising an electrical machine, particularly in the shape of a generator, according to claim 11.

## Patentansprüche

1. Statorelement (1) für eine elektrische Maschine, insbesondere einen Generator, mit einem Joch (2) mit mindestens zwei nebeneinander angeordneten, axial verlaufenden Schlitzen (3) zum Aufnehmen einer Statorwicklung (4, 5, 6), wobei die Statorwicklung (4, 5, 6) aus einer Anzahl in radialer Richtung übereinandergestapelter Stränge (7) aufgebaut ist, wobei jede Statorwicklung (4, 5, 6) vom Joch (2) aus axial verlaufende Wickelköpfe (4', 5', 6') umfasst, wobei sich die axialen Längen der Stränge (7) der jeweiligen Statorwicklung (4, 5, 6) unterscheiden, wobei mindestens ein Wickelkopf (4', 5', 6') einer entsprechenden Statorwicklung (4, 5, 6) eine abgeschrägte oder gekrümmte Form aufweist, wobei sich die axialen Längen der Stränge (7) einer entsprechenden Statorwicklung (4, 5, 6) radial nach außen oder nach innen hin verringern, wobei sich die axiale Länge der Stränge einer ersten Statorwicklung radial nach außen hin erhöht, während sich die axiale Länge der Stränge einer anderen Statorwicklung radial nach außen hin verringert.

2. Statorelement nach Anspruch 1, wobei das Statorelement (1) mehr als eine Statorwicklung (4, 5, 6) umfasst, wobei die Wickelköpfe (4', 5', 6') der jeweiligen Statorwicklungen (4, 5, 6) unterschiedlich geformt sind.

3. Statorelement nach einem der vorhergehenden Ansprüche, bei dem die Wickelköpfe (4', 5', 6') einer Statorwicklung (4, 5, 6) radial nach außen oder nach innen geneigt sind.

4. Statorelement nach Anspruch 3, wobei das Statorelement (1) drei Statorwicklungen (4, 5, 6) umfasst, wobei die Wickelköpfe (4') einer ersten Statorwicklung (4) nicht geneigt oder radial nach außen geneigt sind und die Wickelköpfe (5', 6') der zweiten und der dritten Statorwicklung (5, 6) radial nach innen geneigt sind.

5. Statorelement nach Anspruch 3, wobei das Statorelement (1) drei Statorwicklungen (4, 5, 6) umfasst, wobei die Wickelköpfe einer ersten Statorwicklung nicht geneigt oder radial nach innen geneigt sind und die Wickelköpfe der zweiten und der dritten Statorwicklung radial nach außen geneigt sind.

6. Statorelement nach einem der vorhergehenden Ansprüche, wobei das Statorelement (1) mehr als eine Statorwicklung (4, 5, 6) umfasst, wobei die Wickelköpfe (4', 5', 6') der jeweiligen Statorwicklungen (4, 5, 6) in Bezug auf die Mittelachse (8) des Statorelements (1) in unterschiedlichen Winkeln geneigt sind.

7. Statorelement nach Anspruch 6, wobei das Statorelement (1) drei Statorwicklungen (4, 5, 6) umfasst, wobei die Wickelköpfe (4') einer ersten Statorwicklung (4) gegen den Uhrzeigersinn um 0 bis 15° und die Wickelköpfe (5') einer zweiten Statorwicklung (5) im Uhrzeigersinn um 45° und die Wickelköpfe (6') einer dritten Statorwicklung (6) im Uhrzeigersinn um 90° in Bezug auf die Mittelachse (8) des Statorelements (1) geneigt sind.

8. Statorelement nach Anspruch 6, wobei das Statorelement (1) drei Statorwicklungen (4, 5, 6) umfasst, wobei die Wickelköpfe einer ersten Statorwicklung im Uhrzeigersinn um 0 bis 15° und die Wickelköpfe einer zweiten Statorwicklung gegen den Uhrzeigersinn um 45° und die Wickelköpfe einer dritten Statorwicklung gegen den Uhrzeigersinn um 90° in Bezug auf die Mittelachse (8) des Statorelements (1) geneigt sind.

9. Statorelement nach einem der vorhergehenden Ansprüche, bei dem die Wickelköpfe (4', 6') einer ersten Statorwicklung (4, 6) so geformt sind, dass sie die Wickelköpfe (5') einer weiteren Statorwicklung (5) zumindest teilweise umgeben.

10. Statorelement nach einem der vorhergehenden Ansprüche, bei dem die Stränge (7) aus Metall, insbesondere Kupfer oder Aluminium, bestehen.

11. Elektrische Maschine, insbesondere Generator für eine Windenergieanlage, mit einem Rotor, der in Bezug auf einen Stator drehbar ist, wobei der Stator mindestens ein Statorelement (1) nach einem der vorhergehenden Ansprüche umfasst.

12. Windenergieanlage, insbesondere getriebelose Windenergieanlage, mit einer elektrischen Maschine, insbesondere in Form eines Generators, nach Anspruch 11.

## Revendications

1. Elément de stator (1) pour une machine électrique, en particulier un générateur, comprenant une culasse (2) ayant au moins deux fentes (3) s'étendant axialement disposées de manière adjacente pour recevoir un enroulement de stator (4, 5, 6), l'enroulement de stator (4, 5, 6) étant composé de plusieurs brins (7) empilés les uns sur les autres dans la direction radiale, chaque enroulement de stator (4, 5, 6) comprenant des enroulements d'extrémité (4', 5', 6') s'étendant axialement au-delà de la culasse (2), moyennant quoi les brins (7) de l'enroulement de stator respectif (4, 5, 6) diffèrent dans leurs longueurs axiales avec au moins un enroulement d'extrémité (4', 5', 6') d'un enroulement de stator respectif (4, 5, 6) ayant une forme biseautée ou courbée, moyennant quoi les longueurs axiales des brins (7) d'un enroulement de stator respectif (4, 5, 6) diminuent dans la direction radialement vers l'extérieur ou l'intérieur, les brins d'un premier enroulement de stator augmentant en longueur axiale dans la direction radialement vers l'extérieur, tandis que les brins d'un autre enroulement de stator diminuent en longueur axiale dans la direction radialement vers l'extérieur.

2. Elément de stator selon la revendication 1, dans lequel l'élément de stator (1) comprend plus d'un enroulement de stator (4, 5, 6), moyennant quoi les enroulements d'extrémité (4', 5', 6') des enroulements de stator respectifs (4, 5, 6) ont des formes différentes.

3. Elément de stator selon l'une des revendications précédentes, dans lequel les enroulements d'extrémité (4', 5', 6') d'un enroulement de stator (4, 5, 6) sont inclinés dans la direction radialement vers l'extérieur ou l'intérieur.

4. Elément de stator selon la revendication 3, dans lequel l'élément de stator (1) comprend trois enroulements de stator (4, 5, 6), moyennant quoi les enroulements d'extrémité (4') d'un premier enroulement de stator (4) ne sont pas inclinés ou sont inclinés dans la direction radialement vers l'extérieur et les enroulements d'extrémité (5', 6') des deuxième et troisième enroulements de stator (5, 6) sont inclinés dans la direction radialement vers l'intérieur.

5. Elément de stator selon la revendication 3, dans lequel l'élément de stator (1) comprend trois enroulements de stator (4, 5, 6), moyennant quoi les enroulements d'extrémité d'un premier enroulement de stator ne sont pas inclinés ou sont inclinés dans la direction radialement vers l'intérieur et les enroulements d'extrémité des deuxième et troisième enroulements de stator sont inclinés dans la direction radialement vers l'extérieur.

6. Elément de stator selon l'une des revendications précédentes, dans lequel l'élément de stator (1) comprend plus d'un enroulement de stator (4, 5, 6), moyennant quoi les enroulements d'extrémité (4', 5', 6') des enroulements de stator respectifs (4, 5, 6) sont inclinés selon différents angles par rapport à l'axe central (8) de l'élément de stator (1).

7. Elément de stator selon la revendication 6, dans lequel l'élément de stator (1) comprend trois enroulements de stator (4, 5, 6), moyennant quoi les enroulements d'extrémité (4') d'un premier enroulement de stator (4) sont inclinés de 0-15° dans le sens antihoraire et les enroulements d'extrémité (5') d'un deuxième enroulement de stator (5) sont inclinés de 45° dans le sens horaire et les enroulements d'extrémité (6') d'un troisième enroulement de stator (6) sont inclinés de 90° dans le sens horaire par rapport à l'axe central (8) de l'élément de stator (1).

8. Elément de stator selon la revendication 6, dans lequel l'élément de stator (1) comprend trois enroulements de stator (4, 5, 6), moyennant quoi les enroulements d'extrémité d'un premier enroulement de stator sont inclinés de 0-15° dans le sens horaire et les enroulements d'extrémité d'un deuxième enroulement de stator sont inclinés de 45° dans le sens antihoraire et les enroulements d'extrémité d'un troisième enroulement de stator sont inclinés de 90° dans le sens antihoraire par rapport à l'axe central (8) de l'élément de stator (1).

9. Elément de stator selon l'une des revendications précédentes, dans lequel les enroulements d'extrémité (4', 6') d'un premier enroulement de stator (4, 6) sont façonnés pour enfermer au moins partiellement les enroulements d'extrémité (5') d'un autre enroulement de stator (5).

10. Elément de stator selon l'une des revendications précédentes, dans lequel les brins (7) sont réalisés en métal, en particulier en cuivre ou en aluminium.

11. Machine électrique, en particulier générateur pour une éolienne, ayant un rotor pouvant effectuer une rotation par rapport à un stator, le stator comprenant au moins un élément de stator (1) selon l'une des revendications précédentes.

12. Eolienne, en particulier éolienne à entraînement direct, comprenant une machine électrique, en particulier sous la forme d'un générateur, selon la revendication 11.
